Europäisches Patentamt

European Patent Office

Office européen des brevets

(19)

(11) Veröffentlichungsnummer: **0 333 983**

**A1**

(12) **EUROPÄISCHE PATENTANMELDUNG**

(21) Anmeldenummer: 89100644.7

(22) Anmeldetag: 14.01.89

(51) Int. Cl.4: **F16L 5/02 , H02G 3/22**

(30) Priorität: 24.03.88 DE 3809885

(43) Veröffentlichungstag der Anmeldung:
27.09.89 Patentblatt 89/39

(84) Benannte Vertragsstaaten:
AT BE CH ES FR GB IT LI NL SE

(71) Anmelder: PLASTOFORM GMBH & CO. KG
Burgstrasse 25
D-4973 Vlotho(DE)

(72) Erfinder: Hauff, Werner
Herlsbühlstrasse 19
D-7925 Dischingen-Ballmertshofen(DE)

(74) Vertreter: Fay, Hermann, Dipl.-Phys. Dr. et al
Dipl.-Phys. Hermann Fay und Dr. Joachim
Dziewior Ensingerstrasse 21 Postfach 17 67
D-7900 Ulm/Donau(DE)

(54) Durchführung für Leitungen durch eine Wandöffnung.

(57) Durchführung für Leitungen, wie Kabel, Rohre oder dergl., durch eine Wandöffnung, bestehend aus einem die Wandöffnung rundum begrenzenden Rahmen (4), aus die Rahmenöffnung füllenden Paßplatten (7), die gegeneinander, gegen die Leitungen (1) und gegen die Laibungsfläche (6) des Rahmens (4) abdichten. Die Paßplatten (7) reichen einteilig quer über die Rahmenöffnung von einer zur gegenüber liegenden anderen Rahmenseite und liegen an ihren beiden jeweils die Rahmenseitenflächen (5, 5') übergreifenden Enden mit der Stirnfläche (11) der Laibungsfläche (6) an. Die Paßplatten (7) werden im Rahmen (4) mittels einer Druckvorrichtung (9) mit einer innerhalb des Rahmens (4) liegenden Preßplatte (10) verpreßt. Die Paßplatten (7) und die Preßplatte (10) sind je in drei in Leitungslängsrichtung hintereinander liegende und kraftschlüssig miteinander verbundene Stücke (7.1, 7.2, 10.1, 10.2) unterteilt, vonw elchen das Mittelstück (7.1, 10.1) aus einem elastisch weich eingestellten Kautschuk und die beiden Außenstücke (7.2, 10.2) aus einem durch Zugabe von Flammschutzmitteln elastisch hart eingestellten Kautschuk bestehen. Die beiden Außenstücke (10.2) der Preßplatte (10) sind über das Mittelstück (10.1) in Leitungslängsrichtung gegeneinander verspannt.

Fig.1

## Durchführung für Leitungen durch eine Wandöffnung.

Die Erfindung betrifft eine Durchführung für Leitungen, wie Kabel, Rohre oder dergl., durch eine Wandöffnung, bestehend aus einem die Wandöffnung rundum begrenzenden Rahmen mit zwei in Leitungslängsrichtung hintereinander liegenden Rahmenseitenflächen und einer dazwischen liegenden Laibungsfläche an jeder Rahmenseite, ferner aus die Rahmenöffnung füllenden Paßplatten, die gegeneinander, gegen die Leitungen und gegen die Laibungsfläche abdichten und dazu den Leitungsquerschnitten entsprechende Leitungsaufnahme bilden, die von den Trennflächen zwischen den Paßplatten geschnitten werden, wobei die Paßplatten einteilig quer über die Rahmenöffnung von einer zur gegenüber liegenden anderen Rahmenseite reichen, an ihren beiden jeweils die Rahmenseitenflächen übergreifenden Enden mit der Stirnfläche der Laibungsfläche anliegen und an den Trennflächen in Leitungslängsrichtung formschlüssig miteinander im Eingriff stehen, und aus einer die Paßplatten im Rahmen verpressenden Druckvorrichtung mit einer innerhalb des Rahmens liegenden Preßplatte.

Durchführungen dieser Art sind in der nicht vorveröffentlichten deutschen Patentanmeldung P 37 27 159.8 beschrieben. Bei ihnen besitzt die Druckvorrichtung zwei Preßplatten, die keilförmiges Profil mit geneigt zur Leitungslängsrichtung verlaufenden Keilflächen aufweisen und an diesen Keilflächen so aneinander liegen, daß sich das dicke Keilende der einen Preßplatte am dünnen Keilende der jeweils anderen Preßplatte befindet. Werden die beiden Preßplatten mit Hilfe von Spannplatten und Spannschrauben an ihren Keilflächen übereinander geschoben, so vergrößert sich ihre Gesamtdicke und entsprechend werden die Paßplatten im Rahmen verpreßt. Im übrigen kann noch eine der Preßplatten zwischen zwei Spannplatten nachgespannt werden, wodurch diese Preßplatte quer zur Rahmenebene komprimiert und eine weitere Verpressung der Paßplatten erreicht wird. Die Preßplatten und die Paßplatten bestehen aus einem Kunstkautschuk, wie Neopren oder Chloropren, dem zur Erzielung hoher Feuerwiderstandsdauer Flammschutzmittel, Blähmittel und dergleichen beigefügt sind. Die Beimischung dieser Zusätze ergibt eine elastisch sehr harte Einstellung des Kautschuks, und zwar schon bei vergleichsweise nur geringen Zusatzmengen. Werden daher der Kautschukmischung die Zusätze in einer im Hinblick auf die Feuerwiderstandsdauer an sich gewünschten Menge zugegeben, so werden dadurch die Paßplatten und die Preßplatten elastisch so hart, daß sie auch bei hohen Preßkräften der Druckvorrichtung keine ausreichende Abdichtung der Durchführung gegen Wasser, Gas und Rauch mehr ergeben, da hierfür ein elastisch möglichst weich eingestellter Kautschuk erforderlich ist, damit sich die Paßplatten bzw. Preßplatten beim Verpressen im Rahmen dichtschließend aneinander, an die Leitungen und an die Laibung des Rahmens anlegen können.

Der Erfindung liegt die Aufgabe zugrunde, eine Durchführung der eingangs genannten Art so auszubilden, daß eine gute Dichtigkeit bei trotzdem langer Feuerwiderstandsdauer erzielt wird, ohne daß dazu die Druckvorrichtung besonders große Preßkräfte erzeugen muß.

Diese Aufgabe wird nach der Erfindung dadurch gelöst, daß die Paßplatten und die Preßplatte je in drei in Leitungslängsrichtung hintereinander liegende und kraftschlüssig miteinander verbundene Stücke unterteilt sind, von welchen das Mittelstück aus einem elastisch weich eingestellten Kautschuk und die beiden Außenstücke aus einem durch Zugabe von Flammschutzmitteln elastisch hart eingestellten Kautschuk bestehen, und daß die beiden Außenstücke der Preßplatte über das Mittelstück in Leitungslängsrichtung gegeneinander verspannt sind.

Bei der erfindungsgemäßen Durchführung übernehmen die Außenstücke der Preßplatte und der Paßplatten die Feuerwiderstands- und Flammschutzfunktion, die Mittelstücke die Dichtfunktion der Durchführung. Die Außenstücke können daher hohe Anteile an Flammschutzmitteln, Blähmitteln und dergleichen enthalten, denn die damit verbundene elastische Härte bleibt auf die Dichtfunktion der Mittelstücke ohne Einfluß. Die Mittelstücke, die der unmittelbaren Brandeinwirkung durch die Außenstücke entzogen sind und zur Feuerwiderstandsund Flammschutzfunktion nur wenig, wenn überhaupt etwas, beitragen, enthalten solche Zusätze in nur geringer Menge oder sind überhaupt frei davon, so daß sie sehr weichelastisch sind und auch ohne große Preßkräfte schon eine zuverlässige Dichtwirkung, und zwar auch untereinander und über die Durchführung insgesamt, ergeben. Es genügt daher schon ihre Verpressung durch allein die Kompression nur einer einzigen Preßplatte. Die zur Kompression der Preßplatte erforderlichen Stauchkräfte sind wegen der elastischen Weichheit des im wesentlichen allein der Kompression unterliegenden Mittelstücks der Preßplatte ebenfalls entsprechenden gering. Im Ergebnis wird nicht nur eine einfachere Konstruktion und Montage der Druckvorrichtung, sondern durch die Trennung der Feuerwiderstandsfunktion und der Dichtfunktion voneinander auch erreicht, daß Feuerwiderstandsdauer und Dichtigkeit unabhängig voneinander und in jeweils optimaler Weise eingestellt werden können. Die Außen- und Mittelstücke bestehen beispielsweise aus Chloropren- oder Neopren-Kautschuk, wobei die Mittelstücke eine Shore-Härte von maximal 55° oder weniger, die Außenstücke eine solche von mindestens 60° oder mehr haben.

Vorzugsweise sind die drei Stücke der Preßplatte bzw. jeder Paßplatte miteinander verklebt. Zusätzlich oder auch stattdessen können die Paßplatten an ihren den Laibungsflächen des Rahmens anliegenden Stirnflächen Klammern aufweisen, welche die Außenstücke über das Mittelstück miteinander verbinden und wegen ihrer unmittelbaren Nachbarschaft zur Laibungsfläche des Rahmens die Feuerwiderstandsdauer der Paßplatten nicht beeinträchtigen. Im einzelnen wird die Anordnung zweckmäßigerweise so getroffen, daß die Klammern als U-förmige Bügel ausgebildet und mit den Bügelschenkeln in den Außenstücken verankert sind, und daß der das Mittelstück überspannende Bügelrücken vertieft im Mittelstück und in den Außenstücken liegt. Es empfiehlt sich, die Klammern so tief in die Außenstücke und das Mittelstück einzuschlagen, daß die Stirnfläche mindestens des Mittelstücks durch elastische Werkstoffverformung den Bügelrücken der Klammer überwölbt und verdeckt und dadurch auch die Dichtfunktion der Mittelstücke gegenüber der Laibung des Rahmens unbeeinträchtigt bleibt.

Die im wesentlichen quer zur Leitungslängsrichtung verlaufenden Flächen, in welchen das Mittelstück den beiden Außenstücken anliegt, sind vorzugsweise in Leitungslängsrichtung und konvex zu den Außenstücken hin gewölbt, so daß sich Druckdifferenzen beidseits der Paßplatten und die Stauchkräfte beim Komprimieren der Preßplatte gewölbemäßig auf die Mittelstücke abtragen und sich dadurch eine gute Querfestigkeit der Paßplatten und der Preßplatte insgesamt ergibt. Um die Abdichtung der Mittelstücke gegen die Laibung des Rahmens weiter zu verbessern, sind nach einem weiteren Vorschlag der Erfindung die Mittelstücke an ihren Enden mit je einem in Leitungslängsrichtung verbreiterten Flansch versehen, dessen Ränder formschlüssig in Falzen der Außenstücke liegen. Im einzelnen wird man die Ausbildung zweckmäßig so treffen, daß der Flansch sich zu den Rändern hin in der Dicke verjüngt und daß das Falzprofil eine sich entsprechend verringernde Tiefe aufweist.

Eine weiter bevorzugte Ausführungsform ist dadurch gekennzeichnet, daß in die Außenstücke der Preßplatte im wesentlichen senkrecht zur Leitungslängsrichtung stehende starre Spannplatten, vorzugsweise aus Metall, eingelassen und mit in Leitungslängsrichtung verlaufenden Spannankern durch das Mittelstück hindurch miteinander verbunden sind. Dies bringt den Vorteil, daß die Spannplatten und die Köpfe der Spannanker nach außen von den Außenstücken überdeckt und somit der unmittelbaren Brandeinwirkung entzogen sind. Im einzelnen können die Außenstücke für jeden Spannanker eine Durchgangsbohrung zur Aufnahme des Spannankerkopfes aufweisen, in der der Spannankerkopf versenkt angeordnet und durch einen Stopfen aus demselben Werkstoff wie das Außenstück verdeckt ist.

Zweckmäßigerweise sind die Spannanker Gewindebolzen, auf welchen Spannmuttern als Spannankerköpfe sitzen. Vorzugsweise sind die Spannmuttern als Hutmuttern ausgebildet. Mit ihrer vorgegebenen Huttiefe ermöglichen die Hutmuttern in besonders einfacher Weise eine Begrenzung des Spannweges bei der Verpressung des Mittelstücks der Preßplatte. Zusätzlich zu den Spannankern können Führungsstifte vorgesehen sein, welche die Spannplatten verbinden und auf denen die Spannplatten mit Führungsbohrungen parallel zueinander geführt sind. Dies ergibt bei der Kompression eine gleichmäßige Kraftbeanspruchung des Mittelstücks über seine gesamte Fläche. Auch die Enden der Führungsstifte sind zweckmäßigerweise in den Außenstücken der Preßplatte versenkt angeordnet und nach außen von den Außenstücken überdeckt. Weiter empfiehlt es sich im Hinblick auf möglichst gleichmäßige Kraftbeanspruchungen des Mittelstücks, daß sich die Spannplatten in den Außenstücken von Falz zu Falz erstrecken und die Außenstücke in jeweils zwei Teile trennen, und daß die Außenstücke mit ihren jeweils beiden Teilen, die Spannplatten und das Mittelstück auf den Spannankern und/oder den Führungsstiften geführt sind. Zweckmäßigerweise ist nur ein einziger mittig angeordneter Spannanker und beidseits desselben je ein Führungsstift vorgesehen, was die Montage der Durchführung wesentlich vereinfach und beschleunigt, weil nur ein einziger Spannanker angezogen zu werden braucht.

Die Verzahnung der Paßplatten untereinander und mit der Preßplatte ist auch bei deren Teilung in Mittelstück und Außenstücke ohne weiteres möglich. Zwar können die Mittelstücke und die Außenstücke benachbarter Paßplatten jeweils für sich miteinander verzahnt sein. Jedoch genügt schon eine Verzahnung nur der Außenstücke. Erfindungsgemäß ist daher insoweit vorgesehen, daß die Außenstücke an den Paßplatten wie an der Preßplatte entlang ihrem einen Außenrand eine zum dort benachbarten Außenstück vorstehende Leiste und entlang ihres anderen Außenrandes einen Falz aufweisen, in den die Leiste des anderen benachbarten Außenstückes formschlüssig eingreift.

Im folgenden wird die Erfindung an einem in der Zeichnung dargestellten Ausführungsbeispiel näher erläutert; es zeigen:

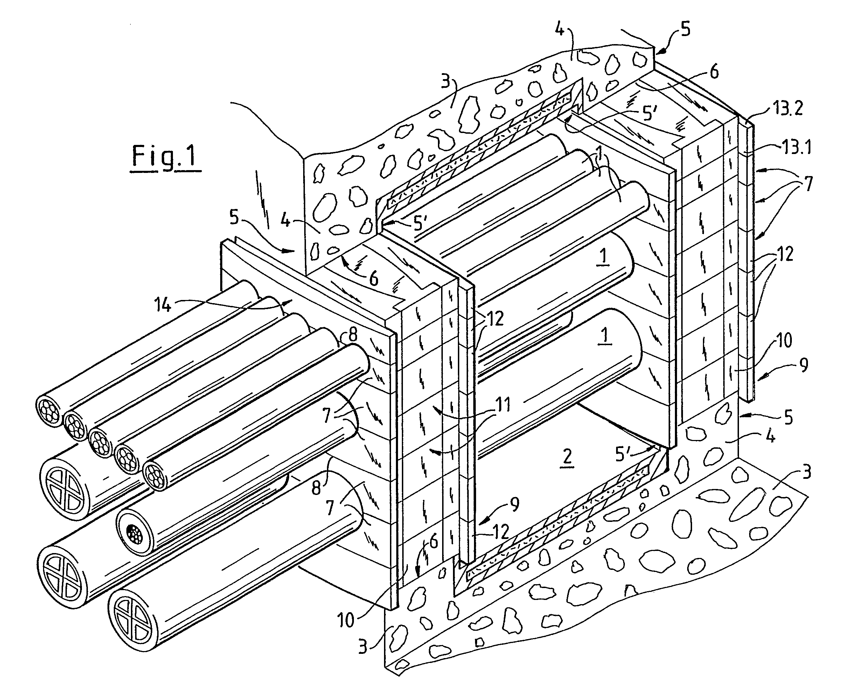

Fig. 1 in einer Schrägdarstellung teilweise geschnitten eine Durchführung nach der Erfindung in einer Betonwand,

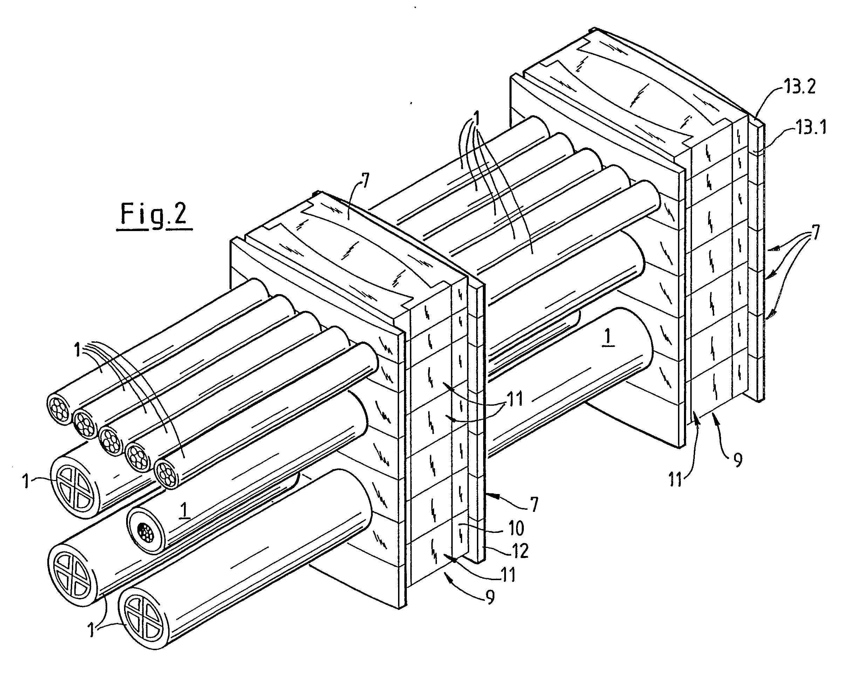

Fig. 2 die Durchführungsteile zusammen mit den Leitungen der Durchführung nach Fig. 1 ohne Wiedergabe der Wand bei im übrigen der Fig. 1 entsprechender Darstellung,

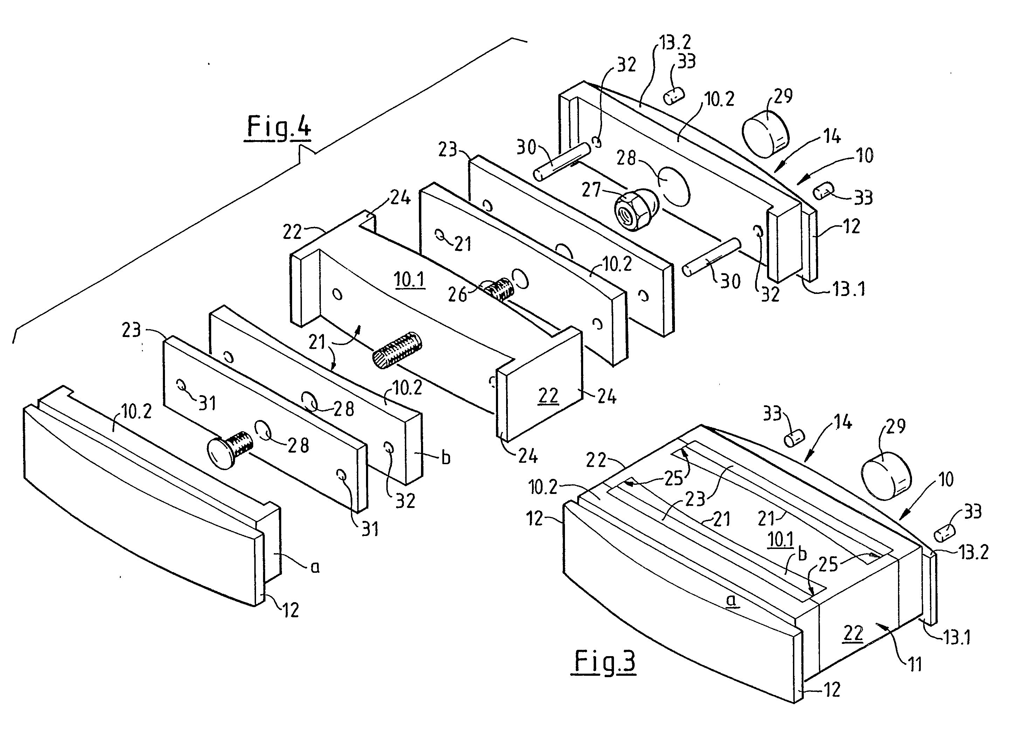

Fig. 3 die Druckvorrichtung der Durchführung nach den Fig. 1 und 2 in einer Einzeldarstellung im zusammengesetzten Zustand,

Fig. 4 den Gegenstand der Fig. 3 im auseinander gezogenen Zustand, und

Fig. 5 eine Paßplatte der Durchführung nach den Fig. 1 und 2 in einer Einzeldarstellung in einer Ausführungsform ohne Leitungsaufnahmen.

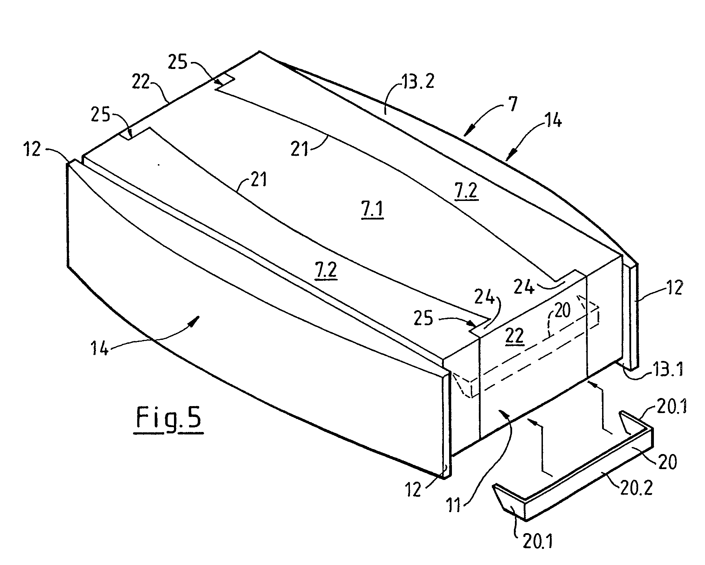

In der Zeichnung sind die Leitungen 1, nämlich elektrische Kabel verschiedenen Durchmessers, jeweils nur zum Teil dargestellt. Die Leitungen 1 laufen durch eine Wandöffnung 2 in einer Betonwand 3. Die Durchführung umfaßt einen die Wandöffnung 2 rundum begrenzenden wandfesten Rahmen 4, an dessen sich paarweise gegenüberliegenden Rahmenseiten zwei in Leitungslängsrichtung hintereinander liegende Rahmenseitenflächen 5, 5' und dazwischen eine in den Rahmenseitenflächen nach innen in die Wandöffnung 2 vorspringende Laibungsfläche 6 ausgebildet sind. Die Durchführung umfaßt ferner den Leerraum des Rahmens 4 ausfüllende Paßplatten 7, beispielsweise aus Neopren, die gegeneinander, gegen die Leitungen 1 und gegen die Laibungsfläche 6 des Rahmens 4 abdichten. Die Paßplatten 7 bilden den Leitungsquerschnitten entsprechende Leitungsaufnahmen, die von den Trennflächen 8 zwischen den Paßplatten 7 geschnitten werden. In der Fig. 5 ist der Einfachheit wegen keine dieser Leitungsaufnahmen dargestellt. Der zur Abdichtung benötigte Dichtungsdruck wird von einer die Paßplatten 7 im Rahmen 4 elastisch verpressenden Druckvorrichtung 9 ausgeübt. Diese Druckvorrichtung 9 umfaßt eine einzige innerhalb des Rahmens 4 liegende Preßplatte 10, die in noch näher zu erläuternder Weise im Rahmen 4 verspannt werden kann.

Im einzelnen reichen die Paßplatten 7 und die Preßplatte 10 einteilig quer über die Wandöffnung 2 von einer zur gegenüber liegenden anderen Rahmenseite, wobei diese Rahmenseiten im Ausführungsbeispiel die vertikal ausgerichteten Längsseiten des Rahmens 4 sind. An beiden Enden liegen die Paßplatten 7 mit ihren Stirnflächen 11 der Laibungsfläche 6 an. Außerdem sind sie dort mit nach außen über die Rahmenseitenflächen 5, 5' greifenden Verankerungsnasen 12 versehen, welche die Paßplatten 7 und die Preßplatte 10 durch Anschlag an den Rahmenseitenflächen 5, 5' in Leitungslängsrichtung am Rahmen 4 fixieren. Die Paßplatten 7 sind an den Trennflächen 8 ebenso wie die Preßplatte 10 mit einander zugeordneten, quer zur Leitungslängsrichtung verlaufenden Leisten 13.1 und Falzen 13.2 versehen, über die die benachbarten Paßplatten 7 an der Trennfläche 8 in Leitungslängsrichtung formschlüssig miteinander in Eingriff stehen. Der gleiche Eingriff erfolgt zwischen der Preßplatte 10 und der ihr anliegenden Paßplatte 7. Die Paßplatten 7 und die Preßplatte 10 sind an den quer zur Leitungslängsrichtung verlaufenden Querflächen 14 konvex gewölbt.

Im Ausführungsbeispiel besitzt die Wand 3 eine so große Dicke, daß an beiden Enden der Wandöffnung 2 je ein Rahmen 4 mit Paßplatten 7 und Druckvorrichtung 9 angeordnet werden kann. Zwischen diesen beiden Rahmen 4 ist ein Futterrohr in die Wand 3 eingebettet. Es besteht aber insbesondere bei dünneren Wänden selbstverständlich auch die Möglichkeit, die Paßstücke 7 mit der Druckvorrichtung 9 in nur einer einzigen Anordnung in der Wandöffnung 2 anzuordnen.

Die Paßplatten 7 und die Preßplatte 10 sind je in drei in Leitungslängsrichtung hintereinander liegende und kraftschlüssig miteinander verklebte Stücke unterteilt. Das Mittelstück 7.1, 10.1 besteht aus elastisch weich eingestelltem Kautschuk mit einer Shore-Härte von weniger als 50°, während die Außenstücke 7.2, 10.2 aus einem durch Zugabe von Flammschutzmitteln, Blähmitteln usw. elastisch hart eingestellten Kautschuk mit einer Shore-Härte von mehr als 60° bestehen. Die beiden Außenstücke 10.2 der Preßplatte 10 sind über das Mittelstück 10.1 in Leitungslängsrichtung gegeneinander verspannt.

Zusätzlich zur Verklebung ihrer drei Stücke können die Paßplatten 7 an ihren den Laibungsflächen 6 des Rahmens 4 anliegenden Stirnflächen 11 Klammern 20 aufweisen, welche die Außenstücke 7.2 über das Mittelstück 7.1 miteinander verbinden. In Fig. 5 sind diese Klammern im montierten Zustand gestrichelt, eine einzelne Klammer in aus dem Paßstück entferntem Zustand ausgezogen dargestellt. Diese Klammern 20 sind als U-förmige Bügel ausgebildet und mit den Bügelschenkeln 20.1 in den Außenstücken 7.2 verankert. Der das Mittelstück 7.1 überspannende Bügelrücken 20.2 liegt vertieft im Mittelstück 7.1 und in den Außenstücken 7.2, wobei im einzelnen die Klammern 20 so tief in die Außenstücke 7.2 und das Mittelstück 7.1 eingeschlagen sind, daß die Stirnfläche 11 jedenfalls des Mittelstücks 7.1 durch elastische Verformung des Kautschuks den Bügelrücken 20.2 der Klammer 20 überwölbt und verdeckt, so daß die Dichtfunktion der Stirnfläche 11 gegen die Laibungsfläche 6 des Rahmens 4 nicht beeinträchtigt wird.

Die im wesentlichen quer zur Leitungslängsrichtung den Außenstücken 7.2, 10.2 anliegenden Flächen 21 des Mittelstücks 7.1, 10.1 sind in Leitungslängsrichtung und konvex zu den Außenstücken 7.2, 10.2 hin gewölbt. Die Mittelstücke 7.1, 10.1 besitzen an ihren Enden je einen in Leitungslängsrichtung verbreiterten Flansch 22, dessen Ränder 24 formschlüssig in Falzen 25 der Außenstücke 7.2, 10.2 liegen. Der Flansch 22 verjüngt sich zu den Rändern 24 hin in der Dicke und entsprechend besitzt das Falzprofil 25 eine sich verringernde Tiefe.

In die Außenstücke 10.2 der Preßplatte 10 sind im wesentlichen senkrecht zur Leitungslängsrichtung stehende metallische Spannplatten 23 eingelassen, die mit in Leitungslängsrichtung verlaufenden Spannankern 26 durch das Mittelstück 10.1 hindurch miteinander verbunden sind. Die Spannplatten 23 und die Köpfe 27 der Spannanker 26 sind nach außen von den Außenstücken 10.2 der Preßplatte 10 überdeckt. Die Außenstücke 10.2 besitzen für jeden Spannanker 26 eine Durchgangsbohrung 28 zur Aufnahe des Spannankerköpfs 27. In dieser Aufnahme ist der Spannankerkopf 27 versenkt angeordnet und durch einen in die Aufnahme eingedrückten Stopfen 29 aus demselben Werkstoff wie das Außenstück 10.2 verdeckt, so daß der Spannankerkopf 27 der unmittelbaren Brandeinwirkung entzogen ist. Im einzelnen sind die Spannanker 26 Gewindebolzen, auf welchen Spannmuttern als Spannankerköpfe 27 sitzen, die als Hutmuttern ausgebildet sind. Zusätzlich zu den Spannankern 26 sind Führungsstifte 30 vorgesehen, welche die Spannplatten 23 verbinden und auf denen die Spannplatten mit Führungsbohrungen 31 parallel zueinander geführt sind. Auch die Enden dieser Führungsstifte 30 sind in den Außenstücken 10.2 der Preßplatte 10 versenkt angeordnet und nach außen von den Außenstücken 10.2 überdeckt, wozu wiederum Durchgangsbohrungen 32 vorgesehen sein können, die durch Stopfen 33 verschlossen sind. Die Spannplatten 23 erstecken sich in den Außenstücken 10.2 von Falz 25 zu Falz und trennen dadurch die Außenstücke 10.2 in jeweils zwei Teile. Diese beiden Teile a, b der Außenstücke 10.2 sind mit den Spannplatten 23 und dem Mittelstück 10.1 gemeinsam auf dem Spannanker 26 und/oder den Führungsstiften 30 geführt. Im einzelnen ist im Ausführungsbeispiel nur ein einziger mittig angeordneter Spannanker 26 vorgesehen, beidseits dessen sich je ein Führungsstift 30 befindet.

Wird die Preßplatte 10 mit dem Spannanker 26 horizontal komprimiert, dehnt sich das Mittelstücke 10.1 vertikal aus und verpreßt in dieser Richtung das Mittelstück 7.1 aller Preßplatten 7, wodurch sich die Mittelstücke 7.1 mit ihren Flanschen 22 gegen die Laibung 6 des Rahmens 4 anlegen und außerdem gegeneinander und gegen die Leitungen 1 abdichten.

## Ansprüche

1. Durchführung für Leitungen, wie Kabel, Rohre oder dergl., durch eine Wandöffnung, bestehend aus einem die Wandöffnung rundum begrenzenden Rahmen (4) mit zwei in Leitungslängsrichtung hintereinander liegenden Rahmenseitenflächen (5, 5') und einer dazwischen liegenden Laibungsfläche (6) an jeder Rahmenseite, ferner aus die Rahmenöffnung füllenden Paßplatten (7), die gegeneinander, gegen die Leitungen (1) und gegen die Laibungsfläche (6) abdichten und dazu den Leitungsquerschnitten entsprechende Leitungsaufnahmen bilden, die von den Trennflächen (8) zwischen den Paßplatten (7) geschnitten werden, wobei die Paßplatten (7) einteilig quer über die Rahmenöffnung von einer zur gegenüber liegenden anderen Rahmenseite reichen, an ihren beiden jeweils die Rahmenseitenflächen (5, 5') übergreifenden Enden mit der Stirnfläche (11) der Laibungsfläche (6) anliegen und a den Trennflächen (8) in Leitungslängsrichtung formschlüssig miteinander im Eingriff stehen, und aus einer die Paßplatten (7) im Rahmen verpressenden Druckvorrichtung (9) mit einer innerhalb des Rahmens (4) liegenden Preßplatte (10), dadurch gekennzeichnet, daß die Paßplatten (7) und die Preßplatte (10) je in drei in Leitungslängsrichtung hintereinander liegende und kraftschlüssig miteinander verbundene Stücke unterteilt sind, von welchen das Mittelstück (7.1, 10.1) aus einem elastisch weich eingestellten Kautschuk und die beiden Außenstücke (7.2, 10.2) aus einem durch Zugabe von Flammschutzmitteln elastisch hart eingestellten Kautschuk bestehen, und daß die beiden Außenstücke (10.2) der Preßplatte (10) über das Mittelstück (10.1) in Leitungslängsrichtung gegeneinander verspannt sind.

2. Durchführung nach Anspruch 1, dadurch gekennzeichnet, daß die drei Stücke (7.1, 7.2 bzw. 10.1, 10.2) der Preßplatte bzw. jeder Paßplatte miteinander verklebt sind.

3. Durchführung nach Anspruch 1 oder 2, dadurch gekennzeichnet, daß die Paßplatten (7) an ihren den Laibungsflächen (6) des Rahmens (4) anliegenden Stirnflächen (11) Klammern (20) aufweisen, welche die Außenstücke (7.2) über das Mittelstück (7.1) miteinander verbinden.

4. Durchführung nach Anspruch 3, dadurch gekennzeichnet, daß die Klammern (20) als U-förmige Bügel ausgebildet und mit den Bügelschenkeln (20.1) in den Außenstücken (7.2) verankert sind, und daß der das Mittelstück (7.1) überspannende Bügelrücken (20.2) vertieft im Mittelstück (7.1) und in den Außenstücken (7.2) liegt.

5. Durchführung nach Anspruch 4, dadurch gekennzeichnet, daß die Klammern (20) so tief in die Außenstücke (7.2) und das Mittelstück (7.1) eingeschlagen sind, daß die Stirnfläche (11) mindestens des Mittelstücks (7.1) durch elastische Werkstoffverformung den Bügelrücken (20.2) der Klammer (20) überwölbt und verdeckt.

6. Durchführung nach einem der Ansprüche 1 bis 5, dadurch gekennzeichnet, daß den Außenstücken (7.2, 10.2) anliegende Flächen (21) des Mittelstücks (7.1, 10.2) in Leitungslängsrichtung und konvex zu den Außenstücken (7.2, 10.2) hin gewölbt sind.

7. Durchführung nach einem der Ansprüche 1 bis 6, dadurch gekennzeichnet, daß die Mittelstücke (7.1, 10.1) an ihren Enden je einen in Leitungslängsrichtung verbreiterten Flansch (22) aufweisen, dessen Ränder (24) formschlüssig in Falzen (25) der Außenstücke (7.2, 10.2) liegen.

8. Durchführung nach Anspruch 7, dadurch gekennzeichnet, daß der Flansch (22) sich zu den Rändern hin in der Dicke verjüngt und das Falzprofil (25) eine sich entsprechend verringernde Tiefe aufweist.

9. Durchführung nach einem der Ansprüche 1 bis 8, dadurch gekennzeichnet, daß in die Außenstücke (10.2) der Preßplatte (10) im wesentlichen senkrecht zur Leitungslängsrichtung stehende starre Spannplatten (23), vorzugsweise aus Metall, eingelassen und mit in Leitunslängsrichtung verlaufenden Spannankern (26) durch das Mittelstück (10.1) hindurch miteinander verbunden sind.

10. Durchführung nach Anspruch 9, dadurch gekennzeichnet, daß die Spannplatten (23) und die Köpfe (27) der Spannanker (26) nach außen von den Außenstücken (10.2) der Preßplatte (10) überdeckt sind.

11. Durchführung nach Anspruch 10, dadurch gekennzeichnet, daß die Außenstücke (10.2) für jeden Spannanker (26) eine Durchgangsbohrung (28) zur Aufnahme des Spannankerkopfes (27) aufweisen, in der der Spannankerkopf versenkt angeordnet und durch einen Stopfen (29) aus demselben Werkstoff wie das Außenstück (10.2) verdeckt ist.

12. Durchführung nach einem der Ansprüche 9 bis 11, dadurch gekennzeichnet, daß die Spannanker (26) Gewindebolzen sind, auf welchen Spannmuttern als Spannköpfe (27) sitzen.

13. Durchführung nach Anspruch 12, dadurch gekennzeichnet, daß die Spannmuttern als Hutmuttern ausgebildet sind.

14. Durchführung nach einem der Ansprüche 9 bis 13, dadurch gekennzeichnet, daß zusätzlich zu den Spannankern (26) Führungsstifte (30) vorgesehen sind, welche die Spannplatten (23) verbinden und auf denen die Spannplatten (23) mit Führungsbohrungen (31) parallel zueinander geführt sind.

15. Durchführung nach Anspruch 14, dadurch gekennzeichnet, daß auch die Enden der Führungsstifte (30) in den Außenstücken (10.2) der Preßplatte (10) versenkt angeordnet und nach außen von den Außenstücken (10.2) überdeckt sind.

16. Durchführung nach einem der Ansprüche 9 bis 15, dadurch gekennzeichnet, daß sich die Spannplatten (23) in den Außenstücken (10.2) von Falz (25) zu Falz erstrecken und die Außenstücke in jeweils zwei Teile (a, b) trennen, und daß die Außenstücke (10.2) mit ihren jeweils beiden Teilen (a, b), die Spannplatten (23) und das Mittelstück (10.1) auf den Spannankern (26) und/oder den Führungsstiften (30) geführt sind.

17. Durchführung nach einem der Ansprüche 9 bis 16, dadurch gekennzeichnet, daß nur ein einziger mittig angeordneter Spannanker (26) und beidseits desselben je ein Führungsstift (30) vorgesehen sind.

18. Durchführung nach einem der Ansprüche 1 bis 17, dadurch gekennzeichnet, daß die Außenstücke (7.2, 10.2) an den Paßplatten (7) wie an der Preßplatte (10) entlang ihrem einen Außenrand eine zum dort benachbarten Außenstück vorstehende Leiste (13.1) und entlang ihres anderen Außenrandes einen Falz (13.2) aufweisen, in den die Leiste (13.1) des andererseits benachbarten Außenstückes formschlüssig eingreift.

Fig.1

Fig.2

Fig.3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 821 191 (P. BRAÜMER)<br>* Seite 10, Zeile 1 - Seite 13, Zeile 23; Figuren *<br>--- | 1 | F 16 L 5/02<br>H 02 G 3/22 |
| A | DE-A-2 654 806 (N. BRENDEL)<br>* Seite 10, Zeile 2 - Seite 11, Zeile 10; Figuren *<br>----- | 1 | |

RECHERCHIERTE
SACHGEBIETE (Int. Cl.4)

F 16 L
H 02 G

Der vorliegende Recherchenbericht wurde für alle Patentansprüche erstellt

| Recherchenort | Abschlußdatum der Recherche | Prüfer |
|---|---|---|
| DEN HAAG | 29-06-1989 | HUBEAU M.G. |